# EUROPÄISCHE PATENTSCHRIFT

(11) **EP 2 416 925 B1**
(45) Veröffentlichungstag und Bekanntmachung des Hinweises auf die Patenterteilung: **11.09.2013**
(21) Anmeldenummer: 10713427.2
(22) Anmeldetag: 08.04.2010
(51) Int. Cl.: B24B 55/05, B23Q 11/08

(54) **SCHUTZHAUBE FÜR ELEKTROHANDWERKZEUGGERÄTE UND ELEKTROHANDWERKZEUGGERÄT**
GUARD FOR A PORTABLE MACHINE TOOL, MACHINE TOOL
CARTER DE PROTECTION POUR UNE MACHINE-OUTIL PORTABLE, MACHINE-OUTIL PORTABLE

(30) Priorität: 11.04.2009 DE 102009017299
(43) Veröffentlichungstag der Anmeldung: 15.02.2012
(73) Patentinhaber: Metabowerke GmbH, 72622 Nürtingen (DE)
(72) Erfinder: HILLER, Matthias, 72631 Aichtal (DE)
(74) Vertreter: Lorenz, Werner
(86) Internationale Anmeldenummer: PCT/EP2010/002187
(87) Internationale Veröffentlichungsnummer: WO 2010/115620

(56) Entgegenhaltungen:
- DE-A1- 4 322 284
- DE-A1-102006 022 386
- DE-A1-102007 041 840

## Beschreibung

Die Erfindung betrifft zum einen eine Schutzhaube für ein Elektrohandwerkzeuggerät, insbesondere einen Winkelschleifer, mit einem ein insbesondere scheibenförmiges, rotierendes Werkzeug zumindest teilweise überdeckenden Schutzhaubenteller, der sich senkrecht zu einem Schutzhaubenkragen erstreckt, und wobei die Schutzhaube mit dem Schutzhauben-kragen an einem Maschinenhals festlegbar ist und der Schutzhaubenkragen ein Spannband trägt, über das er mittels eines Spannmittels zusammenziehbar ist, und wobei mindestens ein zwischen Schutzhaubenkragen und Maschinenhals wirkendes formschlüssiges Verdrehsicherungselement vorgesehen ist, das mit einem korrespondierenden Element des Maschinenhalses zusammenwirkt. Zum anderen betrifft die Erfindung ein Elektrohandwerkzeuggerät.

Bei Elektrohandwerkzeuggeräten, insbesondere winkelschleifern, ist vielfach eine Schutzhaube vorgesehen und vorgeschrieben, die die Aufgabe hat, die beim Arbeiten von dem rotierenden Werkzeug, z. B. Schleif- oder Trennscheibe, weggeschleuderten Funken bzw. Materialpartikel vom Bediener fernzuhalten. Darüber hinaus soll insbesondere durch die Schutzhaube erreicht werden, dass im Falle einer Zerstörung des Schleifwerkzeugs dessen Teile nicht den Bediener eines Elektrohandwerkzeuggeräts treffen. Es ist hier im Allgemeinen vorgesehen, dass die Schutzhaube nur einen eingeschränkten Winkelbereich des scheibenförmigen Werkzeugs überdeckt, und zwar in der Regel in etwa 180° des rotierenden Werkzeugs. Dies gewährt generell einen ausreichenden Schutz bei den verschiedenen Arbeitseinsätzen. Da jedoch je nach Arbeitseinsatz ein unterschiedlicher Ansatzwinkel des Werkzeugs gegeben ist, ist es vielfach erwünscht, dass die Schutzhaube verstellbar ausgestaltet ist hinsichtlich ihrer Drehposition zum Maschinengehäuse. So ist z. B. in einer Ruheposition die Schutzhaube zumeist symmetrisch zur Gehäuselängsachse auf der in Richtung des Maschinengehäuses weisenden Seite des Schleifwerkzeugs vorgesehen. Je nach Bedienposition kann jedoch auch gewünscht sein, dass andere Bereiche abgedeckt werden, und zwar in der Regel diejenigen Bereiche, die gegenüber dem aktuellen Arbeitsbereich liegen. Um zu erreichen, dass die Schutzhaube durch den Bediener in die notwendige Schutzposition gedreht werden kann, ist es vorteilhaft, wenn die Schutzhaube verstellt werden kann. Nur wenn eine Verstellung nicht umständlich ist, erfolgt eine arbeitsgerechte Einstellung der Schutzhaube und damit ein sicherer Schutz des Bedieners auch bei Zerbersten des Werkzeugs.

So offenbart beispielsweise die EP 0 599 090 ein Elektrohandwerkzeuggerät mit einer Schutzhaube, wobei der Schutzhaubenkragen ein Spannband aufweist, das den Schutzhaubenkragen umspannt und wobei am Schutzhaubenkragen Federzungen vorgesehen sind, die auf einen Spindelhals des Elektrohandwerkzeuggerätes gerichtete Rastnasen tragen, wobei die Rastnasen in entsprechende Aussparungen des Spindelhalses eingreifen, wenn das Spannband gespannt wird. Auf diese Weise ist zusätzlich zu der Festlegung über das Spannband eine formschlüssige Arretierung der Schutzhaube möglich.

Eine weitere Handwerkzeugmaschine ist aus der DE 10 2007 041 840 A1 vorbekannt, die eine Schutzhaubenarretierung beschreibt, wobei das Spannmittel zum Spannen des Spannbandes in seiner Spannposition mehrfach formschlüssig mit dem Maschinenhals verbindbar ist und in seiner Löseposition außer Formschluss mit dem Maschinenhals steht.

Eine verwandte Lösung ist in der deutschen Patentanmeldung DE 10 2006 022 386 A1 gezeigt.

Hiervon ausgehend stellt sich der Erfindung nun die Aufgabe, eine Schutzhaube bereitzustellen, die eine sichere Festlegung der Schutzhaube auch im Fall des Zerberstens des Werkzeugs ermöglicht und die auf der anderen Seite vergleichsweise einfach und damit kostengünstig aufgebaut ist und insbesondere auf aufwendige Hebelkonstruktionen verzichtet.

Die Erfindung löst diese Aufgabe durch eine Schutzhaube für Elektrohandwerkzeuggeräte mit den Merkmalen des Anspruchs 1, wobei das Spannmittel eine radial angeordnete Schraube umfasst, die im Spannband festgelegt ist und die sich in einem festgelegten Zustand der Schutzhaube unmittelbar oder mittelbar gegen den Maschinenhals abstützt.

Auf die vorstehend beschriebene Weise kann besonders einfach eine sowohl formschlüssige als auch kraftschlüssige Festlegung der Schutzhaube an einem Maschinenhals eines Elektrohandwerkzeuggerätes realisiert werden.

Auf die vorstehend beschriebene Weise ist eine Verbindung zwischen Schutzhaube und Werkzeuggerät konstruktiv einfach und kostengünstig möglich und für den Benutzer zeitsparend mit wenigen Handgriffen herstellbar bzw. lösbar, indem die radial verlaufende Schraube in Richtung auf den Maschinenhals eingedreht oder entgegen der Richtung vom Maschinenhals weg herausgedreht wird. Das Spannband kann dadurch mit nur geringem Kraftaufwand gespannt werden. Die Schraube wirkt dabei insbesondere mit ihrem freien Ende ihres Schaftes mit dem Spannband zusammen.

Gleichzeitig wird sichergestellt, dass durch das formschlüssig wirkende Verdrehsicherungselement auch bei einem nicht so fest angezogenen Spannband die Schutzhaube unverdrehbar an dem Elektrohandwerkzeuggerät fixiert ist und insbesondere auch im Fall eines zerberstenden Werkzeugs sicher in der eingestellten Arbeits- oder Schutzposition verankert ist. Dabei sichert die kraftschlüssige Festlegung über das Spannband beim Festlegen und Arretieren der Schutzhaube diese gegen Vibrationen, wobei bei einer großen wirkenden Kraft, wie sie durch das Zerbersten eines Werkzeugs entsteht, die formschlüssige Arretierung die Schutzhaube in der gewünschten Position verankert, auch wenn in diesem Fall gegebenenfalls die Arretierung durch das Spannband alleine nicht ausreichend wäre.

Dabei wirkt das freie Ende des Schraubenschaftes als Verdrehsicherungsel-ement. D. h. bei Eindrehen der Schraube in radialer Richtung tritt das freie Ende des Schraubenschaftes in ein korrespondierendes Element des Maschinenhalses, insbesondere eine Nut, ein und wirkt mit diesem zur Bildung des Formschlusses zusammen.

Alternativ hierzu kann die Schraube mit einem klammerförmigen Verdrehsicherungselement zusammenwirken, dessen einer Schenkel gegen den Schraubenkopf der Schraube anliegt und dessen anderer Schenkel mindestens ein Rastelement zur Festlegung in korrespondierenden Elementen des Maschinenhalses trägt. Das klammerförmige verdrehsicherungselement besitzt dabei im Wesentlichen eine U-förmige Form, wobei der eine Schenkel gegen den Schraubenkopf anliegt und der andere Schenkel ein oder mehrere Rastelemente trägt. Ein Rastelement kann dabei vorzugsweise durch ein ebenfalls. U-förmiges Element gebildet sein, so dass sich die Verbindung der beiden Schenkel des Us mit dem das oder die Rastelemente tragenden Schenkel des Verdrehsicherungselements ergibt, wobei die beiden Schenkel des Rastelements dann als Krallen wirken, die mit den korrespondierenden Elementen des Maschinenhalses zusammenwirken und insbesondere in entsprechende Nuten des Maschinenhalses eintreten. Dies bietet den Vorteil, dass mehr als ein Element des Verdrehsicherungselements in Formschluss mit dem Maschinenhals tritt, so dass im Fall des Zerberstens die Kraft besser verteilt wird. Darüber hinaus kann durch die U-Form des Rastelements ein Verkippen desselben verhindert werden, wenn sich die Verbindung zwischen den zwei Krallen am Maschinenhals abstützt.

Nach einem ersten bevorzugten Ausführungsbeispiel kann vorgesehen sein, dass die Schraube zum Spannen des Spannbands und zum Herstellen des Formschlusses zwischen dem Verdrehsicherungselement und dem korrespondierenden Element des Maschinenhalses radial nach innen eindrehbar ist und zum Lösen des Spannbandes und zum Aufheben des Formschlusses radial nach außen herausdrehbar ist.

Dadurch kann sowohl der Kraftschluss als auch der Formschluss zeitgleich durch eine einzige Tätigkeit, nämlich das Verstellen des Spannmittels, durch Ein- oder Ausschrauben in radialer Richtung der Schraube bereitgestellt werden.

Dabei kann nach einer ersten Ausgestaltung vorgesehen sein, dass das Spannband ein umlaufendes Spannband ist. Grundsätzlich können geöffnete Spannbänder mit zwei nicht unmittelbar miteinander verbundenen Enden sowie geschlossene bzw. umlaufende Spannbänder vorgesehen sein. Das Spannband kann dabei eine im Wesentlichen ringförmige Form aufweisen, wobei im Bereich, in dem das Spannmittel angeordnet ist, in die Ringform eine Schlaufe oder Ausstülpung nach radial außen eingebracht sein kann, in die dann das Spannmittel aufgenommen ist. Dadurch ist das Spannband im Bereich des Spannmittels weiter vom Maschinenhals beabstandet, wodurch das Spannen erleichtert ist.

Um die Schraube am Spannband festzulegen, kann entweder ein Gewindeelement, insbesondere eine mit dem Spannband verbundene Mutter vorgesehen sein, wobei es sich hierbei insbesondere um eine Vierkantmutter handeln kann. Alternative Ausgestaltungen sind jedoch auch möglich. Nach einer anderen Ausführungsform kann vorgesehen sein, dass ein Gewinde in das Spannband selbst eingeschnitten ist, so dass die Schraube im Spannband selber kraftschlüssig festgelegt werden kann. Dabei ist es nicht erforderlich, dass die Schraube über ihre gesamte Schaftlänge ein Gewinde aufweist. Generell kann auch vorgesehen sein, dass das Gewinde sich lediglich über einen Teil des Schraubenschaftes, insbesondere über den Teil, der näher am Schraubenkopf angeordnet ist, erstreckt.

Um auch bei Vibrationen sicherzustellen, dass es nicht zu Relativbewegungen zwischen den einzelnen Bauteilen kommt, kann vorgesehen sein, dass zwischen dem klammerförmigen Verdrehsicherungselement und dem Spannband eine Druckfeder angeordnet ist, die das klammerförmige Verdrehsicherungselement in Richtung auf den Schraubenkopf belastet, so dass beim Lösen der Schraube das klammerförmige Verdrehsicherungselement der Schraube folgt. Auf diese Weise kann insbesondere beim Öffnen und Schließen des Spannmittels, sichergestellt werden, dass es nicht zu unerwünschten und insbesondere hörbaren Geräuschen zwischen den Teilen.kommt.

Als Druckfeder kann hierbei insbesondere ein Schraubendruckfeder vorgesehen sein, die die Schraube umschließt.

Sofern auf die Feder verzichtet werden soll, kann auch vorgesehen sein, dass das klammerförmige Verdrehsicherungselement mit der Schraube, insbesondere dem Schraubenkopf, verbunden ist. Hierbei kann insbesondere eine formschlüssige Verbindung insbesondere über einen Sicherungsring vorgesehen sein.

Des Weiteren kann vorgesehen sein, dass das Spannband mit dem Schutzhaubenkragen materialschlüssig verbunden ist, z. B. über Punktschweißungen oder eine Schweißnaht. Nach einer weiteren bevorzugten Ausgestaltung kann vorgesehen sein, dass das Spannband den Schutzhaubenkragen bildet.

Des Weiteren betrifft die Erfindung ein Elektrohandwerkzeuggerät, insbesondere für ein rotierendes scheibenförmiges Werkzeug, insbesondere Winkelschleifer, mit einem eine Antriebswelle für das Werkzeug aufnehmenden Maschinenhals, mit einer Schutzhaube der vorstehend beschriebenen Art. Der Maschinenhals kann dabei einen Flansch umfassen und einstückig mit dem Maschinengehäuse verbunden sein. Alternativ kann auch vorgesehen sein, dass der Maschinenhals beispielsweise über eine Schraubverbindung am Werkzeuggehäuse festgelegt ist. Die Antriebswelle für das Werkzeug kann dabei über ein Winkelgetriebe mit der Motorwelle gekoppelt sein.

Dabei ist bevorzugt vorgesehen, dass der Maschinenhals zu den Verdrehsicherungselementen korrespondierende Elemente aufweist, wobei diese insbesondere als in axialer Richtung verlaufende Nuten ausgebildet sind. Die Nuten können dabei über den gesamten Umfang des Maschinenhalses gleichmäßig angeordnet sein oder auch nur in bestimmten Winkelbereichen, so dass nur in diesen Winkelbereichen eine Arretierung der Schutzhaube in formschlüssiger Weise möglich ist.

Es ist dabei besonders bevorzugt, wenn durch mehrere Elemente gleichzeitig ein Formschluss erzeugt wird.

Darüber hinaus kann vorgesehen sein, dass eine Montagehilfe vorgesehen ist, die eine Montage der Schutzhaube nur in bestimmten Winkellagen ermöglicht. Hierzu kann die Schutzhaube sogenannte Montagenocken aufweisen, die bei der Montage der Schutzhaube in Montagenuten des Maschinenhalses eingreifen. Derartige Montagenuten können ebenfalls in axialer Richtung verlaufende Nuten sein, die eine größere Breite als die Nuten zur Aufnahme der Verdrehsicherungselemente besitzen. Nur wenn die Montagenocken in die Montagenuten greifen, lässt sich die Schutzhaube axial auf den Maschinenhals aufschieben.

Des Weiteren kann vorgesehen sein, dass der Maschinenhals eine umlaufende Nut aufweist, die in ausreichendem axialem Abstand vom freien Ende des Maschinenhalses angeordnet ist und einen axialen Abstand der Schutzhaube von einem Werkzeug definiert. Sobald die Montagenocken in diese umlaufende Nut eingreifen, ist eine freie Verdrehbarkeit der Schutzhaube in jede beliebige und insbesondere in eine Arbeitsposition möglich, wobei dann die Schutzhaube in eine gewünschte Arbeitsposition verdreht und dort form- und kraftschlüssig festgelegt werden kann.

In dieser Stellung wird dann die Schraube als Spannmittel in Richtung auf den Maschinenhals radial eingedreht bis das Verdrehsicherungselement einen Formschluss mit dem Maschinenhals erzeugt und ein weiteres Drehen der Schraube nicht mehr möglich ist. Durch diese kombinierte Verspannung sowie formschlüssige Sicherung wird zum einen ein geräuscharmer Betrieb gewährleistet und Vibrationen derart ausgeglichen, dass diese nicht zu einer Bewegung der Schutzhaube gegenüber der Maschine führen.

Dabei sorgt die Verspannung über das Spannband für die Festlegung gegenüber Vibrationen, wobei im Falle einer Zerstörung der Schleifscheibe, die durch den sogenannten "burst-wheel-test" gemäß DIN EN 60745-2-3 nachgebildet wird, eine Fixierung der Schutzhaube durch den Formschluss gegeben ist. In diesem Test wird eine Schleifscheibe bei maximaler Drehzahl zum Bersten gebracht. Die in und auf die Schutzhaube aufprallenden Schleifscheibenteile dürfen die Schutzhaube nur um einen maximalen Winkel von 90° verdrehen. Dies kann durch die zusätzliche Sicherung durch den Formschluss an einer oder mehreren Stellen sichergestellt werden.

Im Falle einer berstenden Scheibe versucht die Schutzhaube, sich um die Achse des Maschinenhalses zu drehen. Dies wird jedoch verhindert, indem die Formschlusselemente in den Nuten des Maschinenhalses festgelegt sind. Beim Montieren ist dabei darauf zu achten, dass sich das oder die Verdrehsicherungselemente mit ihren Formschluss erzeugenden Teilen in den korrespondierenden Elementen befinden. Sofern ein wie zuvor beschriebenes klammerartiges Verdrehsicherungselement verwendet wird, so kann vorgesehen sein, dass das Verbindungselement zwischen den Klauen am Umfang des Maschinenhalses anliegt.

Ein Verkippen des Verdrehsicherungselements bei einem klammerförmigen Element kann dadurch begrenzt werden, dass die Kante des Schutzhaubenkragens gegen das Verdrehsicherungselement gedrückt wird, so dass sich zumindest auf eine der beiden Krallen die Verriegelungskraft noch erhöht und diese noch stärker in die entsprechenden korrespondierenden Elemente des Maschinenhalses gedrückt wird. Es ist daher vorteilhaft, wenn eine Kante des Schutzhaubenkragens gegen das Verdrehsicherungselement jeweils anliegt oder nur einen geringen Spalt hierzu aufweist, so dass sie bei einer Verformung desselben dagegen zur Anlage kommt.

Zum Lösen wird dann die Schraube so weit herausgedreht, bis die Verdrehsicherungselemente außer Eingriff mit den korrespondierenden Elementen kommen. Diese Position muss auch eingenommen werden, um ein Aufschieben der Schutzhaube auf den Maschinenhals zu ermöglichen.

Weitere Vorteile und Merkmale der Erfindung ergeben sich aus den übrigen Anmeldungsunterlagen. Die Erfindung soll im Folgenden anhand einer Zeichnung näher erläutert werden. Dabei zeigen:
Figur 1 eine montierte Schutzhaube im noch nicht festgelegten Zustand,
Figur la einen Ausschnitt aus Figur 1,
Figur 2 eine montierte Schutzhaube im festgelegten Zustand,
Figur 2a einen Ausschnitt aus Figur 2,
Figur 3 die Einzelteile der Schutzhaube gemäß Figuren 1 und 2,
Figur 4 eine montierte Schutzhaube gemäß Figur 3 im noch nicht festgelegtem Zustand,
Figur 4a einen Ausschnitt aus Figur 4,
Figur 5 eine Schutzhaube in festgelegtem Zustand und
Figur 5a einen Ausschnitt aus Figur 5.

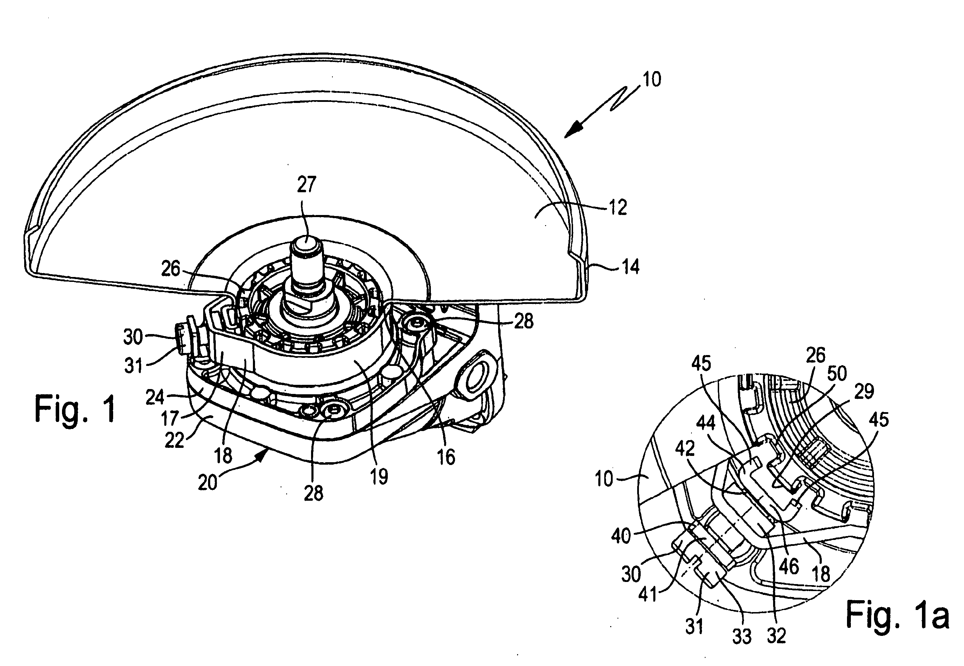

Figur 1 zeigt eine Schutzhaube, die in ihrer Gesamtheit mit dem Bezugszeichen 10 bezeichnet ist. Des Weiteren ist ein Teil eines Elektrohandwerkzeuggerätes 20, hier eines Winkelschleifers gezeigt, mit einem Maschinengehäuse 22 sowie einem hieran festgelegten Maschinenhals 26, der den eigentlichen Maschinenhals 26 sowie einen Flansch 24 zur Festlegung am Maschinengehäuse umfasst. Der Flansch 24 und der Maschinenhals 26 sind einstückig verbunden. Die Festlegung erfolgt dabei über Schraubverbindungen 28, wobei insgesamt vier Schraubverbindungen an dem Flansch 24 vorgesehen sind. Der Maschinenhals 26 besitzt eine im Wesentlichen zylindrische Form und erstreckt sich in axialer Richtung einer Antriebswelle 27, die im Maschinenhals 26 geführt ist und mit der ein Werkzeug, insbesondere eine Trenn- oder Schleifscheibe angetrieben wird.

Die Schutzhaube 10 umfasst einen Schutzhaubenteller 12, der sich im Wesentlichen in radialer Richtung zur Achse 27 erstreckt, wobei die nach außen weisende Kante 14 des Schutzhaubentellers 12 in Richtung auf ein Werkzeug abgewinkelt ist, um so einen besseren Schutz und eine bessere Umschließung des Werkzeugs, das hier nicht dargestellt ist, zu gewährleisten. Darüber hinaus umfasst die Schutzhaube 10 einen Schutzhaubenkragen 16, mit dem die Schutzhaube 10 am Maschinenhals 26 lösbar festlegbar ist. Die Festlegung der Schutzhaube 10 am Maschinenhals 26 kann dabei in verschiedenen diskreten Winkelpositionen erfolgen, um möglichst gut eine breite Anzahl von verschiedenen Arbeitspositionen mit dem Winkelschleifer und damit zugeordnete Winkelpositionen der Schutzhaube abdecken zu können.

Dabei wird die Schutzhaube 10 im Wesentlichen so angeordnet, dass sie einem Arbeitsbereich des Winkelschleifers gegenüberliegend angeordnet ist, um den Bediener vor sich lösenden Teilen sowie vor Funkenflug zu schützen.

Am Schutzhaubenkragen 16 ist darüber hinaus ein Spannband 18 vorgesehen, wobei es sich hier um ein geschlossenes Spannband handelt, das umlaufend um den gesamten Maschinenhals 26 vorgesehen ist. Das Spannband 18 besitzt dabei einen ringförmigen Abschnitt 19 sowie einen sich hiervon nach radial außen ausstülpenden, schlaufenförmigen Bereich 17, wobei im Bereich 17 ein Spannmittel 30 vorgesehen ist, das hier durch eine Schraube 31 gebildet wird. Die Schraube 31 erstreckt sich dabei in radiale Richtung zur Achse der Antriebswelle 27.

Über das Spannband 18 erfolgt eine kraftschlüssige Festlegung der Schutzhaube 10 am Maschinenhals 26 des Elektrohandwerkzeuggerätes.

Figur la zeigt nun das Detail des Spannmittels und der Festlegung der Schutzhaube 10 am Maschinenhals 26. Die Schraube 31 ist dazu über eine Mutter 32, die hier als Vierkantmutter ausgebildet ist, und die mit dem Spannband 18 insbesondere einstückig oder materialschlüssig verbunden sein kann, aber auch separat zum Spannband 18 angeordnet sein kann, verbunden und durchgreift hierbei eine Öffnung im Spannband 18. Dabei wird die Schraube 31 mit dem Gewinde ihres Schraubenschaftes in die Mutter 32 eingeschraubt. Des Weiteren ist ein formschlüssiges Verdrehsicherungselement 40 vorgesehen, das im Wesentlichen U-förmig gestaltet ist, wobei sein einer Schenkel 41 gegen den Kopf 33 der Schraube 31 anliegt und sein anderer Schenkel 42 mit einem weiteren U-förmigen Element 44, das ein Rastelement 44 bildet, verbunden ist, wobei das Rastelement 44 zwei Rastkrallen 45 trägt.

Korrespondierend zu dem Verdrehsicherungselement 40 sind korrespondierende Elemente, nämlich hier in axialer Richtung verlaufende Nuten 50, vorgesehen, in die die Krallen 45 des Verdrehsicherungselements 50 eingreifen können. Der Abstand zwischen den Krallen 45 entspricht dabei dem Abstand zwischen zwei Nuten 50, so dass stets beide Krallen 45 bei festgelegter Schutzhaube 10 mit einer Nut 50 im Eingriff stehen. Das Verbindungselement 46, das die beiden Krallen 45 im Element 44 miteinander verbindet, liegt dann gegen den äußeren Umfang 29 des Maschinenhalses 26 an und stützt sich hiergegen ab und sichert so das Rastelement 44 gegen Verkippen.

Des Weiteren ist zwischen dem Spannband 18 und dem Verdrehsicherungselement 40 eine Druckfeder anordenbar, die hier jedoch nicht gezeigt ist. Über die Feder kann erreicht werden, dass das Verdrehsicherungselement 40 mit seinem Schenkel 41 stets in Richtung auf den Schraubenkopf 33 der Schraube 31 belastet wird.

Figur 1 zeigt nun eine Darstellung, in der die Schutzhaube 10 auf einen Maschinenhals 26 in axialer Richtung aufgeschoben werden kann. Hierzu muss das Spannmittel 30, nämlich die Schraube "offen" sein, d. h. die Schraube muss so weit wie möglich nach radial außen herausgeschraubt werden. Dies ist so weit notwendig, bis die Krallen 45 nicht mehr mit dem Maschinenhals 26 kollidieren.

Zum Aufschieben der Schutzhaube 10 in axialer Richtung ist es nun notwendig, dass die Schutzhaube in einer bestimmten Stellung montiert wird, damit radial am Spannband 18 bzw. am Kragen 16 der Schutzhaube 10 angebrachte Montagenocken in dafür vorgesehene Nuten, die hier jedoch nicht dargestellt sind, am Maschinenhals 26 eingreifen können. Die Schutzhaube 10 wird dann axial so weit auf den Maschinenhals 26 aufgeschoben, bis sich die Montagenocken in einer umlaufenden Nut im Maschinenhals 26 befinden. In dieser Stellung kann die Schutzhaube 10 in eine gewünschte Stellung gebracht werden, indem sie verdreht wird. In dieser gewünschten Arbeitsstellung kann dann die Schutzhaube 10 betriebssicher befestigt werden. Hierzu wird die Schraube 31 nach radial innen eingedreht, wodurch das Verdrehsicherungselement 40 ebenfalls in radialer Richtung auf den Maschinenhals 26 zu bewegt wird, bis die Krallen 45 in die Nuten 51 eingreifen. Eine Montage kann dabei nur in einer Stellung erfolgen, in der die Krallen 45 in die Nuten eingreifen. Ein Montieren in einer Zwischenstellung ist nicht vorgesehen.

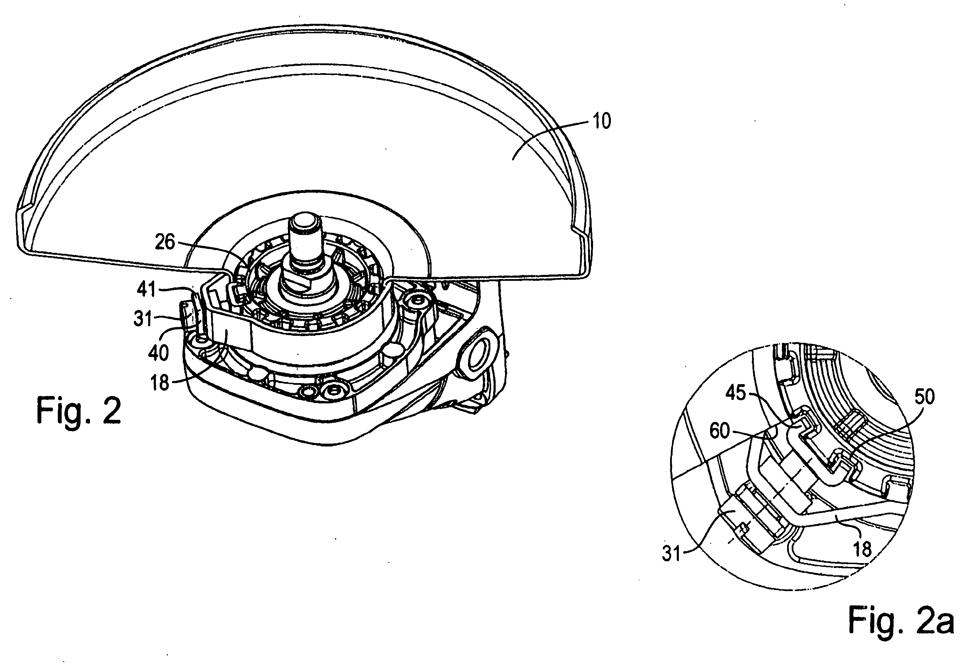

Die Verbindung 46 zwischen den Krallen 45 liegt dann gegen den äußeren Umfang 29 des Maschinenhalses 26 an. Beim weiteren Festziehen, d. h. radialen Einschrauben der Schraube 31 wird das Spannband 18 gespannt und eine kraftschlüssige Verbindung zwischen Schutzhaube 10 und dem Maschinenhals 26 erreicht. Eine derartig montierte und festgelegte Stellung ist in den Figuren 2 und 2a dargestellt.

Die Schraube 31 ist hierbei so weit in Richtung auf den Maschinenhals 26 nach radial innen eingeschraubt worden, bis das Verdrehsicherungselement 40 mit seinem Schenkel 41 annähernd gegen das Spannband 18 anliegt, nur noch beabstandet durch die nicht dargestellte Druckfeder. In dieser Position greifen die Krallen 45, wie insbesondere Figur 2a entnommen werden kann, in die entsprechenden korrespondierenden Elemente 50, die durch Nuten gebildet sind, ein und bilden so zwei formschlüssige Verbindungen in zwei nebeneinander angeordneten Nuten 50. Das weitere Einschrauben in radialer Richtung der Schraube 31 erfolgt dabei so lange, bis ein ausreichendes Spannen erfolgt ist und somit Vibrationen, die beim Betrieb entstehen, nicht zu einem Bewegen der Schutzhaube 10 gegenüber dem Maschinenhals 26 führen, wodurch unerwünschte Klappergeräusche sowie ein unangenehmes Handhabungsgefühl entstehen können.

Der zusätzliche Formschluss über die Krallen 45 in den Nuten 50 führt dazu, dass die Schutzhaube 10 auch im Fall einer großen Belastung sich nicht verdreht. Im Fall einer berstenden Scheibe versucht die Schutzhaube 10, sich um die Achse des Maschinenhalses 26 zu drehen. Dies wird verhindert, indem die Krallen 45 mit den Nuten 50 im Maschinenhals 26 einen Formschluss bilden. Darüber hinaus wird ein Verkippen des Verdrehsicherungselementes 40 dadurch begrenzt, dass die Kante 60 des Schutzhaubenkragens 16 gegen das Verdrehsicherungselement 40 in diesem Berstfall gedrückt wird. Somit erhöht sich die Kraft auf die Krallen 45 noch zusätzlich, wodurch zumindest eine der beiden Krallen 45 noch stärker in die Nut 50 am Maschinenhals 26 gedrückt wird. Durch die Verformung einiger Teile der Schutzhaube 10 im Falle eines Berstens eines Werkzeugs, wobei gleichzeitig die Sicherheitsfunktion der Schutzhaube 10 nicht verringert wird, kann die im Berstfall entstehende Energie kontrolliert abgebaut werden.

Insbesondere kommt es dabei zu einer Verformung des Verdrehsicherungselementes 40.

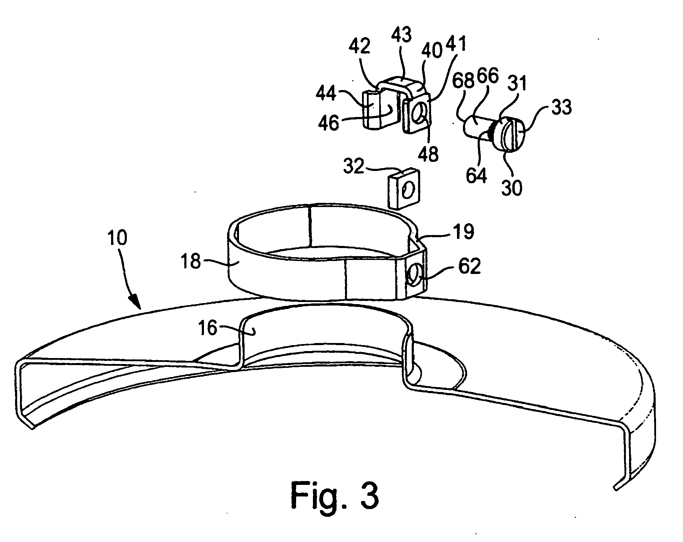

Figur 3 zeigt nun die Einzelteile der Schutzhaube 10. Hierbei ist insbesondere zu sehen, dass der Schutzhaubenkragen 16 über den gesamten Bereich vom geschlossenen Spannband 18 umfangen wird. Im Bereich der Ausstülpung 19 des Spannbandes wird dann auf der Innenseite gegen die Bohrung 62 im Spannband die Vierkantmutter 32 so festgelegt, dass die Schraube 31 mit ihrem Gewinde 64 in die Mutter 62 eingeschraubt werden kann. Zwischen Schraubenkopf 33 und dem Spannband 18 ist dabei noch das Verdrehsicherungselement 40 mit seinem Schenkel 61 angeordnet, das ebenfalls eine Öffnung 48 umfasst, die von der Schraube 31 durchgriffen wird. Die Schraube 31 umfasst neben dem Schraubenkopf noch einen Schraubenschaft 66 mit einem freien Ende 68, wobei die Schraube 31 mit dem freien Ende 68 des Schraubenschaftes gegen einen Bereich 46 des Verdrehsicherungselements 40 anliegt und diesen in radialer Richtung belastet. Das Verdrehsicherungselement 40 ist dabei klammerförmig ausgebildet mit seinen zwei Schenkeln 41 und 42, wobei am Schenkel 42 das Rastelement 44 einstückig angebracht ist. Zwischen dem Spannband 18 und dem Schenkel 41 kann darüber hinaus die nicht dargestellte Druckfeder angeordnet sein.

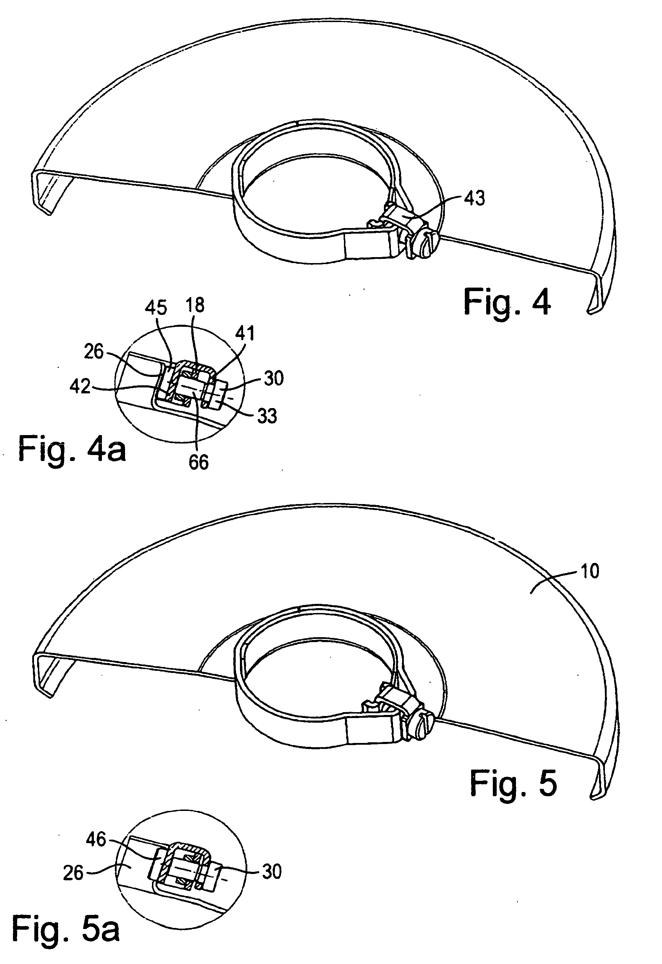

Figur 4 zeigt nun die Schutzhaube 10 alleine in einer Figur 1 entsprechenden Darstellung, jedoch mit Blick von oben auf die Schutzhaube 10, so dass das Verbindungselement 43 zwischen den Schenkeln 41 und 42 gesehen werden kann. Figur 4a zeigt einen entsprechenden Ausschnitt, wobei die Krallen 45 hier nicht in den Maschinenhals 26 in entsprechende Nuten aufgenommen sind.

Figur 5 zeigt nun eine Darstellung, die der verspannten Position gemäß Figur 2 entspricht, wobei auch hier die Schutzhaube 10 in einer Ansicht von oben, wie sie bei einer Betätigung des Elektrohandwerkzeuggerätes vom Benutzer zu sehen wäre, dargestellt ist. Insbesondere in Figur 5a kann man nun erkennen, dass die Krallen 45 in Nuten 50 des Schutzhaubenhalses 26 eingetreten und hierin festgelegt sind.

Die Schraube 31 ist nun maximal in Richtung auf den Maschinenhals 26 eingeschraubt worden.

Das Spannband 18 kann dabei am Kragen 16 der Schutzhaube 10 mittels Punktschweißen oder über eine lange Schweißnaht angebracht sein. Ebenfalls kann die Vierkantmutter 32 am Spannband 18 angeschweißt werden.

Durch das Eindrehen der Schraube 30 in die Vierkantmutter 32 kommt die Stirnseite des Schraubenkopfes 33 zum Anliegen an den Schenkel 41 des Verdrehsicherungselementes 40. Durch die Vorsehung der nicht dargestellten Druckfeder wird erreicht, dass insbesondere beim Herausschrauben der Schraube 31, wobei es sich bei der Feder insbesondere um eine Schraubenfeder handeln kann, die auf den Schraubenschaft 66 der Schraube 31 aufgefädelt wird, das Verdrehsicherungselement 40 immer mit leichtem Druck in Richtung auf den Schraubenkopf 33 belastet ist und folgt somit der Schraube 31 beim Herausdrehen. Hierdurch wird eine bessere Handhabung bei der Montage erreicht.

Auf die vorstehend beschriebene Weise kann eine Schutzhaube 10 bereitgestellt werden, die die Erfordernisse im sogenannten burst-wheel-Test gemäß DIN EN 60745-2-3 erfüllt und dabei gleichzeitig konstruktiv einfach ausgestaltet ist und preisgünstig hergestellt werden kann.

## Patentansprüche

1. Schutzhaube (10) für Elektrohandwerkzeuggerät, insbesondere Winkelschleifer, mit einem ein insbesondere scheibenförmiges, rotierendes Werkzeug zumindest teilweise überdeckenden Schutzhaubenteller (12), der sich senkrecht zu einem Schutzhaubenkragen (16) erstreckt und wobei die Schutzhaube (10) mit dem Schutzhaubenkragen (16) an einem Maschinenhals (26) festlegbar ist und der Schutzhaubenkragen (16) ein Spannband (18) trägt, über das er mittels eines Spannmittels (30) zusammenziehbar ist und wobei mindestens ein zwischen Schutzhaubenkragen (16) und Maschinenhals (26) wirkendes formschlüssiges Verdrehsicherungselement (40) vorgesehen ist, das mit einem korrespondierenden Element (50) des Maschinenhalses (26) zusammenwirkt, **dadurch gekennzeichnet, dass** das Spannmittel (30) eine radial angeordnete Schraube (31) umfasst, die im Spannband (18) festgelegt ist und die sich in einem festgelegten Zustand der Schutzhaube (10) unmittelbar oder mittelbar gegen den Maschinenhals (26) abstützt,und
entweder das freie Ende (68) des Schraubenschaftes (66) als Verdrehsicherungselement (40) wirkt und mit entsprechenden korrespondierenden Elementen (50) des Maschinenhalses (26) zur Bildung eines Formschlusses zusammenwirkt,
oder die Schraube (31) mit einem klammerförmigen Verdrehsicherungselement (40) zusammenwirkt, dessen einer Schenkel (41) gegen den Schaubenkopf (33) der Schraube (31) anliegt und dessen anderer Schenkel (42) ein oder mehrere Rastelemente (44) mit einer oder mehreren Rastkrallen (45) zur Festlegung in korrespondierenden Elementen (50) des Maschinenhalses (26) trägt.

2. Schutzhaube nach Anspruch 1, **dadurch gekennzeichnet, dass** die Schraube (31) zum Spannen des Spannbandes (18) und zum Herstellen des Formschlusses zwischen dem Verdrehsicherungselement (40) und dem korrespondierenden Element (50) des Maschinenhalses (26) radial nach innen eindrehbar ist und zum Lösen des Spannbandes (18) und zum Aufheben des Formschlusses radial nach außen herausdrehbar ist.

3. Schutzhaube nach Anspruch 1 oder 2, **dadurch gekennzeichnet, dass** das Spannband (18) ein umlaufendes, geschlossenes Spannband (18) ist.

4. Schutzhaube nach einem der Ansprüche 1 bis 3, **dadurch gekennzeichnet, dass** die Schraube (31) in ein Gewindeelement des Spannbandes (18), insbesondere eine mit dem Spannband (18) verbundene Mutter (32) oder ein Gewinde im Spannband (18) eingeschraubt ist.

5. Schutzhaube nach Anspruch 1, **dadurch gekennzeichnet, dass** zwischen dem klammerförmigen Verdrehsicherungselement (40) und dem Spannband (18) eine Druckfeder angeordnet ist, die das klammerförmige Verdrehsicherungselement (40) in Richtung auf den Schraubenkopf (33) belastet, so dass beim Lösen der Schraube (31) das klammerförmige Verdrehsicherungselement (40) der Schraube (31) folgt.

6. Schutzhaube nach Anspruch 1, **dadurch gekennzeichnet, dass** das klammerförmigen Verdrehsicherungselement (40) mit der Schraube (31), insbesondere dem Schraubenkopf (33) insbesondere formschlüssig verbunden ist.

7. Schutzhaube nach einem der vorangehenden Ansprüche,
**dadurch gekennzeichnet, dass** das Spannband (18) an dem Schutzhaubenkragen (16) materialschlüssig festlegbar ist oder den Schutzhaubenkragen (16) bildet.

8. Elektrohandwerkzeuggerät insbesondere für ein rotierendes scheibenförmige Werkzeug, insbesondere Winkelschleifer, mit einem eine Antriebswelle (27) für das Werkzeug aufnehmenden Maschinenhals (26) und mit einer Schutzhaube (10) nach einem der Ansprüche 1 bis 7.

9. Elektrohandwerkzeuggerät nach Anspruch 8, **dadurch gekennzeichnet, dass** der Maschinenhals (26) zu dem Verdrehsicherungselement (40) korrespondierende Elemente (50) aufweist, die insbesondere als in axialer Richtung verlaufenden Nuten (50) ausgebildet sind.

10. Elektrohandwerkzeuggerät nach Anspruch 8 oder 9, **dadurch gekennzeichnet, dass** die Schutzhaube (10) Montagenocken aufweist, die bei der Montage der Schutzhaube (10) in axial verlaufende Montagenuten des Maschinenhalses (26) eingreifen, so dass die Schutzhaube (10) nur in einer bestimmten Winkellage zum Maschinenhals (26) axial auf diesen aufschiebbar ist und eine umlaufende Nut am Maschinenhals (26) vorgesehen ist, in der die Montagennocken im montierten Zustand der Schutzhaube (10) geführt sind, so dass die Schutzhaube (10) gegenüber dem Maschinenhals (26) verdrehbar ist.

11. Elektrohandwerkzeuggerät nach einem der vorangehenden Ansprüche 8 bis 10, **dadurch gekennzeichnet, dass** die korrespondierenden Elemente (50), insbesondere die in axialer Richtung verlaufenden Nuten (50) gleichmäßig über den gesamten Umfang (29) des Maschinenhalses (26) angeordnet sind.

12. Elektrohandwerkzeuggerät nach einem der vorangehenden Ansprüche 8 bis 11, **dadurch gekennzeichnet, dass** die korrespondierenden Elemente (50), insbesondere die in axiale Richtung verlaufenden Nuten (50) nur in bestimmten Winkelbereichen des Maschinenhalses (26) angeordnet sind, um bestimmte Positionen der Schutzhaube (10) vorzugeben.

## Claims

1. Protective hood (10) for an electric hand-held tool appliance, in particular an angle grinder, having a protective hood plate (12) which at least partly covers a, particularly disc-shaped, rotating tool and which extends perpendicularly in relation to a protective hood collar (16) and wherein the protective hood (10) can be fastened by means of the protective hood collar (16) to the neck (26) of a machine and said protective hood collar (16) carries a clamping band (18) via which it can be contracted by means of a clamping means (30) and wherein there is provided at least one formlocking twist-proofing element (40) which acts between the protective hood collar (16) and the neck (26) of the machine and which interacts with a corresponding element (50) belonging to the neck (26) of the machine, **characterised in that** the clamping means (30) comprises a radially arranged screw (31) which is fastened within the clamping band (18) and which is supported, when the protective hood (10) is in a fastened state, directly or indirectly against the neck (26) of the machine, and
either the free end (68) of the screw shaft (66) acts as a twist-proofing element (40) and interacts with suitable corresponding elements (50) belonging to the neck (26) of the machine for the purpose of forming a form-locking connection,
or the screw (31) interacts with a bracket-shaped twist-proofing element (40), one leg (41) of which bears against the screw head (33) of the screw (31), and the other leg (42) of which carries one or more latching elements (44) having one or more latching claws (45) for achieving fastening in corresponding elements (50) belonging to the neck (26) of the machine.

2. Protective hood according to Claim 1, **characterised in that** the screw (31) can be turned radially inwards for clamping the clamping band (18) and for bringing about the form-locking connection between the twist-proofing element (40) and the corresponding element (50) belonging to the neck (26) of the machine, and can be turned radially outwards for loosening the clamping band (18) and undoing the form-locking connection.

3. Protective hood according to Claim 1 or 2, **characterised in that** the clamping band (18) is a circumferential, closed clamping band (18).

4. Protective hood according to one of Claims 1 to 3, **characterised in that** the screw (31) is screwed into a threaded element belonging to the clamping band (18), in particular a nut (32) which is connected to said clamping band (18) or a thread in said clamping band (18).

5. Protective hood according to Claim 1, **characterised in that** there is arranged, between the bracket-shaped twist-proofing element (40) and the clamping band (18), a pressure spring which loads said bracket-shaped twist-proofing element (40) in the direction of the screw head (33), so that, when the screw (31) is undone, the bracket-shaped twist-proofing element (40) follows the screw (31).

6. Protective hood according to Claim 1, **characterised in that** the bracket-shaped twist-proofing element (40) is connected, particularly in a form-locking manner, to the screw (31), in particular the screw head (33).

7. Protective hood according to one of the preceding claims, **characterised in that** the clamping band (18) can be fastened to the protective hood collar (16) by bonding of the materials, or forms said protective hood collar (16).

8. Electric hand-held tool appliance particularly for a rotating, disc-shaped tool, in particular an angle grinder, having a drive shaft (27) for the neck (26) of the machine, which neck receives the tool, and having a protective hood (10) according to one of Claims 1 to 7.

9. Electric hand-held tool appliance according to Claim 8, **characterised in that** the neck (26) of the machine has elements (50) which correspond with the twist-proofing element (40) and which are designed, in particular, as grooves (50) which extend in the axial direction.

10. Electric hand-held tool appliance according to Claim 8 or 9, **characterised in that** the protective hood (10) has mounting dogs which engage, when said protective hood (10) is mounted, in axially extending mounting grooves in the neck (26) of the machine, so that said protective hood (10) can be pushed axially onto the neck (26) of the machine only in a certain angular position in relation to said neck, and there is provided, on the neck (26) of the machine, a circumferential groove within which the mounting dogs are guided when the protective hood (10) is in the mounted state, so that said protective hood (10) can be twisted in relation to the neck (26) of the machine.

11. Electric hand-held tool appliance according to one of the preceding Claims 8 to 10, **characterised in that** the corresponding elements (50), in particular the grooves (50) that extend in the axial direction, are arranged in a uniform manner over the entire periphery (29) of the neck (26) of the machine.

12. Electric hand-held tool appliance according to one of the preceding Claims 8 to 11, **characterised in that** the corresponding elements (50), in particular the grooves (50) that extend in the axial direction, are arranged only in certain angular regions of the neck (26) of the machine in order to predetermine certain positions of the protective hood (10).

## Revendications

1. Capot de protection (10), pour un appareil électroportatif, en particulier une meuleuse d'angle, avec une plaque de capot de protection (12) recouvrant au moins partiellement un outil rotatif, en particulier en forme de disque, la plaque s'étendant perpendiculairement à un col de capot de protection (16) et le capot de protection (10), en liaison avec le col de capot de protection (16), pouvant être fixé à un embout de machine (26) et portant une bande de serrage (18) pouvant être resserrée au moyen d'un élément de serrage (30) et au moins un élément (40) disposé entre le col de capot de protection (16) et l'embout de machine (26), étant susceptible d'être sécurisé et bloqué en position anti-rotation, et coopérant avec un élément complémentaire correspondant (50) de l'embout de machine (26), **caractérisé en ce que** l'élément de serrage (30) comporte une vis (31) disposée radialement, qui est montée sur la bande de serrage (18) et qui, dans une position bloquée du capot de protection (10), se trouve directement ou indirectement en appui contre l'embout de machine (26), et
soit l'extrémité libre (68) du fût de la vis (66) agit comme élément de sécurité anti-rotation (40) et coopère avec l'élément complémentaire correspondant (50) de l'embout de machine (26) pour constituer et opérer comme dispositif de verrouillage de forme,
soit la vis (31) agit avec un élément de sécurité anti-rotation (40) en forme de pince, dont une des branches (41) prend appui contre la tête de vis (33) de la vis (31) et dont l'autre branche (42) comporte un ou plusieurs crans (44) avec une ou plusieurs griffes (45) pour fixer en position l'élément complémentaire correspondant (50) de l'embout de machine (26).

2. Capot de protection selon la revendication 1, **caractérisé en ce que** la vis (31) est agencée pour tendre la bande de serrage (18) et pour réaliser le blocage en position entre l'élément de sécurité anti-rotation (40) et l'élément complémentaire correspondant (50) de l'embout de machine (26), par une rotation radiale vers l'intérieur et pour libérer la bande de serrage (18) et débloquer le verrouillage de forme en rotation et dégagement radial vers l'extérieur.

3. Capot de protection selon la revendication 1 ou 2, **caractérisé en ce que** la bande de serrage (18) est une boucle de serrage (18) périphérique fermée.

4. Capot de protection selon l'une des revendications 1 à 3, **caractérisé en ce que** la vis (31) est agencée pour s'engager dans un élément fileté de la bande de serrage (18), en particulier un écrou (32) lié à la bande de serrage (18) ou un filetage ménagé sur la bande de serrage (18).

5. Capot de protection selon la revendication 1, **caractérisé en ce qu'**il comporte un ressort de compression disposé entre l'élément de sécurité anti-rotation (40) et la bande de serrage (18), qui pousse l'élément de sécurité anti-rotation (40) en direction de et pour prendre appui sur la tête de vis (33), de sorte que, lors de la libération de la vis (31), l'élément de sécurité anti-rotation (40) en forme de pince suit la vis (31).

6. Capot de protection selon la revendication 1, **caractérisé en ce que** l'élément de sécurité anti-rotation (40) et la vis (31), en particulier la tête de vis (33) sont liés par un verrouillage de forme.

7. Capot de protection selon l'une des revendications précédentes, **caractérisé en ce que** la bande de serrage (18) peut être rendue solidaire matériellement du col de capot de protection (16) ou peut constituer ledit col de capot de protection (16).

8. Machine outil portatif, notamment pour un outil rotatif en forme de disque, en particulier pour une meuleuse d'angle avec un arbre d'entraînement (27) avec un embout de machine (26) pour le montage de l'outil et comportant un capot de protection (10) selon l'une des revendications 1 à 7.

9. Machine outil portatif selon la revendication 8, **caractérisée en ce que** l'embout de machine (26) comporte en plus des éléments anti-rotation (40), des éléments (50) complémentaires correspondants (50) qui sont en particulier constitués de rainures (50) s'étendant selon la direction axiale.

10. Machine outil portatif selon la revendication 8 ou 9, **caractérisée en ce que** le capot de protection (10) comporte des saillies de montage qui, lors du montage du capot de protection (10) s'engagent dans des rainures axiales d'assemblage de l'embout de machine (26), de telle manière que le capot de protection (10) ne puisse coulisser axialement sur l'embout de machine que dans une seule position angulaire par rapport à l'embout de machine (26) et **en ce qu'**une gorge périphérique est prévue sur l'embout de machine (26), dans laquelle les saillies de montage sont guidées dans la position assemblée, de sorte que le capot de protection (10) puisse tourner relativement à l'embout de machine (26).

11. Machine outil portatif selon l'une des revendications précédentes 8 à 10, **caractérisée en ce que** les éléments complémentaires correspondants (50), en particulier ceux qui coulissent dans des rainures selon une direction axiale sont répartis également autour de toute la périphérie (29) de l'embout de machine (26).

12. Machine outil portatif selon l'une des revendications précédentes 8 à 11, **caractérisée en ce que** des éléments complémentaires correspondants (50), en particulier des éléments complémentaires correspondants (50) qui coulissent dans des rainures de direction axiale seulement dans des orientations angulaires de l'embout de machine (26) déterminées, sont agencés pour définir des positions prédéterminées du capot de protection (10).
